# EUROPÄISCHE PATENTSCHRIFT

(11) **EP 1 781 940 B1**
(45) Veröffentlichungstag und Bekanntmachung des Hinweises auf die Patenterteilung: **22.10.2008**
(21) Anmeldenummer: 05777564.5
(22) Anmeldetag: 25.08.2005
(51) Int. Cl.: F02N 15/06, F02N 11/08, H02K 41/03, H02K 21/22, H02K 16/00

(54) **STARTERVORRICHTUNG ZUM ANDREHEN VON BRENNKRAFTMASCHINEN**
STARTER DEVICE FOR STARTING INTERNAL COMBUSTION ENGINES
DISPOSITIF DE DEMARREUR POUR METTRE EN MARCHE DES MOTEURS A COMBUSTION INTERNE

(30) Priorität: 27.08.2004 DE 102004041618
(43) Veröffentlichungstag der Anmeldung: 09.05.2007
(73) Patentinhaber: Compact Dynamics GmbH, 82319 Starnberg (DE)
(72) Erfinder: GRÜNDL, Andreas, 82319 Starnberg (DE); HOFFMANN, Bernhard, 82319 Starnberg (DE)
(74) Vertreter: Schmidt, Steffen J.
(86) Internationale Anmeldenummer: PCT/EP2005/009199
(87) Internationale Veröffentlichungsnummer: WO 2006/024458

(56) Entgegenhaltungen:
- EP-A- 0 218 522
- EP-A- 1 445 432
- WO-A-20/04107541
- DE-A1- 19 911 161
- GB-A- 2 345 804
- US-A- 5 045 741
- US-A- 5 990 590
- ANONYMOUS: "Coaxial solenoid starting motor drives" RESEARCH DISCLOSURE, MASON PUBLICATIONS, HAMPSHIRE, GB, Bd. 326, Nr. 66, Juni 1991 (1991-06), XP007116509 ISSN: 0374-4353

## Beschreibung

### Bereich der Erfindung

Die Erfindung betrifft eine Startervorrichtung mit den Merkmalen des Oberbegriffs des Anspruchs 1 zum Andrehen von Brennkraftmaschinen mit einer Start-Stopp-Funktion. Diese Start-Stopp-Funktion sorgt dafür, dass sich die Brennkraftmaschine beim Anhalten selbstständig aus- und z.B. durch Druck auf Kupplungs- oder Gaspedal wieder einschaltet.

### Stand der Technik

Bei den üblichen Startervorrichtungen wird zum Andrehen der Brennkraftmaschine zunächst ein so genanntes Starterritzel der Startervorrichtung in einen mit der Pleuelstange der Brennkraftmaschine gekoppelten Zahnkranz eingespurt und sodann mit der vollen Kraft des Startermotors durchgedreht. Wesentlich ist dabei, dass während des Startens das Starterritzel am Zahnkranz eingespurt bleibt. Hierfür sind verschiedene Lösungen bekannt.

Bei einem so genannten Schraubtrieb-Starter besteht das Einspursystem des Starterritzels aus einem Steilgewinde auf der Abtriebswelle des Starters und einer damit zusammenwirkenden Mitnehmerhülse, die vorne einen Freilauf sowie das Starterritzel trägt. Das Steilgewinde auf der Abtriebswelle schiebt das Ritzel bei Verdrehung gegenüber dem Läufer des Startermotors axial vor, indem beim Einschalten des Starters der Startermotor zunächst ohne Last anläuft. Ritzel und Freilauf drehen sich wegen ihrer Massenträgheit noch nicht mit, wandern aber durch das Steilgewinde nach vorn. Sobald das Ritzel am Zahnkranz anliegt, wird es dort zusätzlich gegen Verdrehung festgehalten und damit weiter vorgeschoben, bis es an einem Anschlag anliegt. Von diesem Zeitpunkt an überträgt der Freilauf das volle Andrehmoment des Startermotors über das Ritzel auf den Zahnkranz, und die Brennkraftmaschine wird durchgedreht. Beim Selbstlauf der Brennkraftmaschine überholt der Zahnkranz den Startermotor und der Freilauf unterbricht den Kraftfluss. Durch die verbleibende Reibung wird nunmehr das Ritzel über das Steilgewinde zurückbewegt. Dieser Ausspurvorgang wird durch eine Rückstellfeder unterstützt, so dass auch bei ausgeschaltetem Starter das Ritzel außer Eingriff bleibt. Dies ist eine komplizierte und im Betrieb fehleranfällige Anordnung mit vielen Komponenten.

Aus der DE 24 39 981 A1 ist ferner eine Startervorrichtung bekannt, bei der die Mitnehmerhülse noch mit einer Sperrverzahnung versehen ist, die mit einer im Startergehäuse befestigten Sperrklinke zusammenwirkt, um beim Vorspuren des Ritzels dieses gegen Verdrehen zu sichern. Nach dem Vorspuren fällt die Sperrklinke in eine Ringnut der Mitnehmerhülse und verriegelt damit das Ritzel gegen ein Zurückspuren während des Startvorganges. Die Sperrklinke wird dabei von einem zusätzlichen Aktuator mit Beginn des Startvorganges betätigt und gelangt erst nach dem Ausschalten des Aktuators durch eine vorgespannte Feder in ihren Entriegelungszustand, in dem sie das Ritzel dann wieder zum Zurückspuren freigibt. Auch diese mechanisch aufwendige Anordnung ist sehr fehleranfällig und für zum Andrehen von Brennkraftmaschinen mit einer Start-Stopp-Funktion aufgrund der erheblich höheren Beanspruchung nur bedingt geeignet.

In den meisten Fällen werden jedoch so genannte Schubschraubtrieb-Starter für Brennkraftmaschinen verwendet, bei denen ein Startrelais das Starterritzel mit Beginn eines Startvorganges über das Steilgewinde in den Zahnkranz der Brennkraftmaschine einspurt. In dem Startrelais ist üblicherweise auch ein Schaltkontakt für den Startermotor mit enthalten. Ober eine Haltewicklung des Startretais muss hier das Starterritzel während des gesamten Startvorganges in der Einspurstellung gehalten werden. Diese ist eine erheblichen Einbauraum beanspruchende Anordnung.

Aus der EP 0 725 216 B1 ist eine Startervorrichtung bekannt, bei der ein Startrelals zum Einschalten des Startermotors im hinteren Teil der Startervorrichtung angeordnet ist, das über einen Seilzug eine Verriegelung des Starterritzels aktiviert. Die Verriegelung verhindert anfangs ein Verdrehen des Ritzels, so dass dieses mit dem Anlaufen des Startermotors zunächst in den Zahnkranz der Brennkraftmaschine mit Hilfe des Steilgewindes einspuren kann. Die Verriegelung enthält ferner eine Rückspursperre, mit der das Starterritzel in seiner Einspurstellung gehalten wird. Mit dem Abschalten des Startrelais wird schließlich die Rückspursperre über eine zuvor durch den Seilzug gespannte Feder wieder aufgehoben. Dies ist ebenfalls eine komplizierte und Im Betrieb fehleranfällige Anordnung mit vielen einzelnen Komponenten.

Aus der DE 199 11 161 A1 ist eine Startervorrichtung bekannt, mit einer Startermaschine, die eine mit einem axial verschiebbar gelagerten Starterritzel zusammenwirkende Abtriebswelle dreht, wobei das Starterritzel mit Beginn eines jeden Startvorganges zum Einspuren in einen Zahnkranz der Brennkraftmaschine vorspurt, wobei das Starterritzel durch einen koaxial zur Abtriebswelle angeordneten Linearmotor zu verschieben ist, wobei der Linearmotor als Innenläufermotor ausgestaltet ist und die Startermaschine als Innenläufermaschine ausgestaltet ist.

Die vorerwähnten Anordnungen zum Andrehen der Brennkraftmaschine sind sehr groß bauend und aufwändig, da sie zu deren Betätigung ein entsprechend stark ausgelegtes Relais erfordern, um neben der Schaltfunktion für den Startermotor auch noch die Einspursicherung für das Starterritzel übernehmen zu können.

Die erwähnten Nachteile mögen bei konventionellen Brennkraftmaschinen gerade noch hinnehmbar sein; bei Brennkraftmaschinen mit einer Start-Stopp-Funktion sind sie aufgrund der im Vergleich zu konventionellen Kraftfahrzeugen erheblich zahlreicheren Betätigungen der Startervorrichtung und der damit einhergehenden Beanspruchung der entsprechenden Komponenten inakzeptabel. Außerdem ist das Platzangebot im Motorraum moderner PKW so gering, dass eine leistungsstärkere Dimensionierung der Startervorrichtung mit der einhergehenden räumlichen Vergrößerung nur schwer möglich ist. Im Sinne eines komfortableren und schnelleren Andrehens der Brennkraftmaschinen mit einer Start-Stopp-Funktion ist jedoch eine leistungsstärkere Startervorrichtung gefordert. Eine weitere Anforderung besteht darin, den Einspur- und Ausspurvorgang der Startervorrichtung geräuscharmer, verschleißfreier und schneller als bei herkömmlichen Startervorrichtungen (insbesondere solchen für Brennkraftmaschinen ohne eine Start-Stopp-Funktion) von statten gehen zu lassen.

Als Lösung der oben genannten Aufgabe lehrt die Erfindung, eine Startervorrichtung der eingangs genannten Art durch die Merkmale des kennzeichnenden Teils des Anspruchs 1 weiterbilden.

Ein konzeptionell wesentlicher Unterschied zu den Anordnungen aus dem Stand der Technik besteht darin, dass bei den erfindungsgemäßen Linearmotoren der Luftspalt zwischen dem Läufer und dem Ständer koaxial zu der Bewegungsrichtung der Mitnehmerhülse (längs der Abriebswelle) verläuft und kreisringzylindrisch gestaltet ist, während bei den bekannten Anordnungen der Luftspalt zwischen dem Elektromagnetanker und der Elektromagnetspute bzw. dem Elektromagnet im Wesentlichen quer zur Betätigungsrichtung des Elektromagnetankers verläuft und im Wesentlichen eben ist.

Die erfindungsgemäße Anordnung der Startermaschine erreicht, dass ein Magnetfluss von einem Schenkel des Magnetfluss-Joches zu dem anderen Schenkel des Magnetfluss-Joches abwechselnd durch die Magnetfluss-Leitstücke und zu diesen ausgerichteten Permanentmagnet-Elemente fließt. Dabei wechselt der Magnetfluss jeweils von einer ersten axial orientierten Reihe der Magnetfluss-Leitstücke und zu diesen ausgerichteten Permanentmagnet-Elementen zu einer benachbarten zweiten Reihe und wieder zurück zur ersten Reihe in axialer Richtung fortschreitend hin und her.

Hierdurch wird eine maximale Ausnutzung des vorhandenen Raums (insbesondere in axialer Richtung) in der Startermaschine mit sehr hoher Zuverlässigkeit im Betrieb bei geringen Herstellungskosten erreicht. Durch die verbesserte Raumausnutzung erhöht sich außerdem der Wirkungsgrad oder die Leistungsdichte der Startermaschine. Mit der erfindungsgemäßen Startvorrichtung ist es möglich, den Verbrennungsmotor beim Startvorgang auf einen Drehzahlbereich von wenigstens etwa 300 - 400 Umdrehungen pro Minute zu bringen; dies verringert den Schadstoffausstoß und hat ein komfortables und zügiges Startverhalten des Verbrennungsmotors zur Folge.

Diese Ausgestaltung der Startervorrichtung erlaubt ein sehr geräuscharmes und Komponenten schonendes Ein- und Ausspuren des Starterritzels, da der Einspurvorgang mittels des Linearmotors - anstelle eines herkömmlichen Starterrelais - erheblich präziser und kontrollierter ausgeführt werden kann. Die erfindungsgemäße Anordnung erlaubt ein kontrolliertes Annähern des Starterritzels an den Zahnkranz der Brennkraftmaschine mittels des Linearmotors und ein ebenfalls kontrolliertes Verdrehen des Starterritzels gegenüber dem Zahnkranz mittels der Startermaschine, sofern die beiderseitigen Zahnstellungen ein geräusch- und reibungsarmes Einspuren nicht unmittelbar zulassen. Damit ist es möglich, Zahnradausgestaltungen zu wählen, die auch im Betrieb der Startervorrichtung sehr geräuscharm sind. Alles dies sind für Brennkraftmaschinen mit Start-Stopp-Betrieb erhebliche Vorteile.

Im Übrigen ist zum Beispiel im Vergleich zu herkömmlichen Ausführungsformen mit Starterrelais eine sehr viel bauraumsparendere Ausführung möglich, da dieses Starterrelais seitlich an der Startermaschine angeordnet ist und über einen Hebeltrieb das Starterritzel in den Zahnkranz der Brennkraftmaschine ein- und ausspurt. Im Gegensatz dazu ist bei der Erfindung der Linearmotor koaxial zu der Abtriebswelle angeordnet, so dass eine sehr viel "schlankere" Ausführungsform bereitgestellt werden kann. Da der Linearmotor auch sehr kurz bauend auszuführen ist, kann eine sehr kompakte Bauform der erfindungsgemäßen Startervorrichtung erreicht werden. Dies erlaubt es auch, die Ansteuerungselektronik in das Gehäuse der erfindungsgemäßen Startervorrichtung bei mit herkömmlichen Startervorrichtungen vergleichbarem Bauraum mit aufzunehmen, so dass kurze Ansteuerleitungen und ein geringerer Gesamt-Montageaufwand erzielbar sind.

Ein weiterer wesentlicher Vorteil des erfindungsgemäßen Konzeptes besteht darin, daß praktisch nur die magnetisch wirksamen Komponenten (die Dauermagnete) zur trägen Masse des Läufers beitragen, während alle anderen Teile des Motors (Spulen, magnetischer Rückschluss, etc.) dem Ständer zugeordnet sind. Damit kann ein besonders hohes Verhältnis von durch den Linearmotor ausgeübter Kraft zu träger Masse erzielt werden. Außerdem ist die erfindungsgemäße Startervorrichtung hervorragend geeignet, das Starterritzel sehr schnell einzuspuren. Dabei kann insbesondere das Annähern des Starterritzel an die Endpositionen (Eingespurt/Ausgespurt) bei hoher Geschwindigkeit mit hohen Beschleunigungsänderungen erfolgen, so dass das Starterritzel mit minimaler Geschwindigkeit seine jeweilige Endposition einnimmt, während das Starterritzel im übrigen mit sehr hohen Geschwindigkeiten bewegt wird. Außerdem steht in den Endbereichen des Bewegungsverlaufs die maximale (Halte)Kraft zur Verfügung. Dies erlaubt einen sehr geräusch- und verschleißarmen, und wegen der erzielbaren hohen Haltekräfte in den Endstellungen gleichzeitig sehr sicheren Betrieb der erfindungsgemäßen Startervorrichtung.

Da bei der erfindungsgemäßen Startervorrichtung mehrere hintereinander geschaltete, einzeln ansteuerbare einphasige Linearmotoren vorgesehen sein können, kann die insgesamt erzeugte Kraft entlang des Hubweges des Starterritzels genau auf den jeweils erforderlichen Bewegungs-/Beschleunigungsverlauf eingestellt werden. Hierbei gilt, dass der Linearmotor der erfindungsgemäßen Startervorrichtung in der Regel einphasig zu betreiben ist. Es ist jedoch auch möglich, die Ständerspulen der einzelnen koaxial zu einander angeordneten Linearmotoren mehrphasig zu betreiben. Durch die erfindungsgemäße Anordnung ist es nicht erforderlich, das Starterritzel mit erheblicher kinetischer Energie zu beaufschlagen, damit dieses seine (eingespurte oder ausgespurte) Endposition einnimmt.

Durch die sehr einfach gestaltbare (einphasige und zylindrische) Anordnung der Ständerspule(n) des Linearmotors ist es möglich, die auf die Spule wirkenden Rüttelkräfte gering zu halten, so dass Vibrationen der Spule oder Reibung der Spule an der Wand der Ständerspulenkammer gering sind. Damit ist es möglich, mit minimalem Isolationsmaterial bzw. Auskleidungsmaterial der Ständerspulenkammer auszukommen. Auch dies trägt zur Kompaktheit und Zuverlässigkeit der Gesamtanordnung bei. Außerdem bewirkt dies eine hohe Leistungsdichte auch bei kleinen erfindungsgemäßen Startervorrichtungen, da der Füllfaktor der Ständerspulenkammer (Spulenvolumen in der Ständerspulenkammer bezogen auf das Gesamtvolumen der Ständerspulenkammer) hoch ist.

Erfindungsgemäß umgibt der dem Läufer des Linearmotors zugewandte Zahn den Läufer zumindest teilweise in Umfangsrichtung. Weiterhin haben benachbarte dauermagnetische Ringe des Läufers radial gerichtete, abwechselnde Magnetorientierungen. Jeweils zwei benachbarte Ringe des Läufers des Linearmotors können auch durch magnetisch nicht wirksame Abstandshalter in einem vorbestimmten Abstand zueinander gehalten sein.

Ein Aspekt der Erfindung sieht vor, dass der Zahn eine Abmessung in der Bewegungsrichtung des Läufers hat, die im wesentlichen gleich der Abmessung eines dauermagnetischen Rings in der Bewegungsrichtung des Läufers ist, so dass in einer vorbestimmten Stellung des Läufers der wenigstens eine Zahn des Ständers mit einem dauermagnetischen Ring fluchtet.

Wenn die Ständerspule radial oder axial neben dem Zahn / den Zähnen angeordnet ist, kann der Spulenbereich in Bewegungsrichtung des Läufers größer sein als der Abstand zwischen zwei benachbart angeordneten Zähnen des Ständers.

Dabei basiert das erfindungsgemäße Konzept darauf, den die Ankerdurchflutung bewirkenden Teil des Ständers, nämlich dem Spulenbereich mit der Ständerspule räumlich aus dem die Kraft des Linearmotors bildenden Teil, nämlich dem Zahnbereich des Ständers "herauslösen" zu können. Damit kann im Vergleich zu Linearmotoren, bei denen die Ständerspulen jeweils zwischen zwei Zähnen des Ständers angeordnet sind, eine erheblich höhere Ankerdurchflutung erreicht werden. Dies liegt daran, dass die Spule des Linearmotors durch die erfindungsgemäße Gestaltung erheblich weniger räumliche Einschränkungen hat und so auf minimale (ohmsche) Verluste - und damit einhergehende maximale Magnetfeldinduktion - optimiert werden kann. Durch die Abmessungen der dauermagnetischen Ringe in der Bewegungsrichtung des Läufers bzw. die Abmessungen eines Zahns des Ständers in der Bewegungsrichtung des Läufers ist eine Polteilung definiert, die kleiner sein kann als die Abmessung der Ständerspule in deren Längsrichtung. Gleichermaßen werden die Kraft bzw. Bewegung hervorrufenden Läufermagnetpol/Ständerzahn-Anordnungen konzentriert, so dass diese nicht durch Ständerspulen unterbrochen sind. Dies erlaubt eine sehr kleine Polteilung, welche wiederum eine hohe Kraftdichte bewirkt. Grundsätzlich ist es jedoch auch möglich, die Ständerspulen zwischen die Ständerzahn-Anordnungen einzubringen.

Der Ständer kann in bekannter Weise aus Elektroblechteilen aufgebaut sein. Es ist aus Vereinfachung der Herstellung jedoch auch möglich, ihn zumindest teilweise als einen weichmagnetischen Formkörper, zum Beispiel aus gepresstem und/oder gesintertem Metallpulver zu gestalten. Vorzugsweise ist der Ständer aus massivem Eisen hergestellt, da selbst bei den erhöhten Dynamikanforderungen des Start-Stopp-Betriebes die Wirbeistromeigenschaften von massivem Eisen ausreichend sind.

Erfindungsgemäß ist am freien Ende der Abtriebswelle auf dieser eine Mitnehmerhülse axial verschiebbar gelagert, an deren von der Startermaschine abliegenden Endbereich das Starterritzel drehfest angeordnet ist, wobei die Abtriebswelle mit der Mitnehmerhülse so gekoppelt ist, dass die Mitnehmerhülse durch den Linearmotor im Sinne eines Ein- oder Ausspurens des Starterritzels in den/aus dem Zahnkranz der Brennkraftmaschine zu verschieben ist. Dabei kann auf ein bei herkömmlichen Startervorrichtungen sonst übliches Vorgelege in Form eines Planetengetriebes verzichtet werden, wodurch die erfindungsgemäße Startervorrichtung relativ kurz baut.

Als magnetischer Rückschluss für die dauermagnetische Ringe des Linearmotors kann zum einen die Mitnehmerhülse dienen auf der die die dauermagnetischen Ringe befestigt sind. Zusätzlich oder statt dessen kann, falls aus Dimensionierungsgründen erforderlich, auch die Abtriebswelle der Startermaschine als magnetischer Rückschluss dienen.

Das Starterritzel der Startervorrichtung und der Zahnkranz der Brennkraftmaschine können schräg verzahnt sein, wodurch der Einspurvorgang und auch der Ausspurvorgang besonders geräuscharm von statten geht

Alternativ zu diesem Linearmotor ist es auch möglich andere Bauarten von Linearmotoren einzusetzen. So ist es zum Beispiel im Bereich der Erfindung einen Reluktanzmotor oder einen Asynchronmotor zu verwenden, wobei auch hier bevorzugt der Ständer außen angeordnet ist, so dass der Linearmotor als Innenläufer ausgestaltet ist. Dies vereinfacht die Lagerung des Läufers gegenüber einer Außenläufervariante.

Die Spulenanordnung der Startermaschine hat erfindungsgemäß wenigstens eine kreisringzylindrische Wicklung und das Magnetfluss-Joch ist radial innerhalb der kreisringzylindrischen Spulenanordnung angeordnet.

Bevorzugt weist der Ständer die Spulenanordnung mit den Magnetfluss-Leitstücken auf und der Läufer ist mit den Permanentmagnet-Elementen versehen. Dies vermeidet die Notwendigkeit bewegter (zum Beispiel rotierender) Stromübergänge auf eine im Läufer vorhandene Spulenanordnung.

Bei der Startermaschine reichen Schenkel des Magnetfluss-Joches von den jeweiligen Stirnflächen der Spulenanordnung her mit einem Endabschnitt auf diejenige Mantelfläche der kreisringzylindrischen Spulenanordnung, an der die Magnetfluss-Leitstücke angeordnet sind. Diese Mantelfläche ist die äußere Mantelfläche der kreisringzylindrischen Spulenanordnung.

Die beiden Endabschnitte können mit Ausnehmungen versehen sein, in die an sie angrenzende Magnetfluss-Leitstücke ragen. Vorzugsweise sind die Ausnehmungen etwas breiter als zwischen ihnen verbleibende Vorsprünge in die jeweils Magnetfluss-Leitstücke unter Bildung eines Spaltes hineingreifen. Diese Anordnung entspricht in etwa der eines Klauenpolmotors. Die in mehreren Reihen angeordneten, mehreren Magnetfluss-Leitstücke jeder Reihe sind zueinander und zu den Magnetfluss-Leitstücken benachbarter Reihen im Wesentlichen gleichmäßig beabstandet angeordnet.

Das Magnetfluss-Joch kann aus Blechen oder Blechabschnitten aufgebaut sein. Es ist auch möglich, dass das Magnetfluss-Joch aus zu der entsprechenden Gestalt gepressten und gesinterten Eisenpartikeln geformt ist. Gleichermaßen können auch Mischformen aus diesen beiden Varianten verwendet werden, bei denen Übergangsbereiche von radial orientierten Blechabschnitten zu axial orientierten Blechabschnitten aus gepressten und gesinterten Eisenpartikeln geformt sind.

Die Magnetfluss-Leitstücke können aus massivem eisenhaltigem Metall, aus gestapelten Blechen oder aus zu der entsprechenden Gestalt gepressten und gesinterten Eisenpartikeln geformt sein. Dies ist in erster Linie von der Betriebsfrequenz des die Spulenanordnung durchfließenden Stromes abhängig, da mit steigender Frequenz die Wirbelstromverluste in Magnetfluss-Leitstücken aus massivem eisenhaltigem Metall zunehmen.

Die Magnetfluss-Leitstücke können eine im Wesentlichen quaderförmige Gestalt haben. Es ist auch möglich, ihnen eine sich zu ihren Enden hin in der Breite und/ oder der Höhe verjüngende Gestalt zu geben. Eine solche Formgebung verringert oder minimiert die magnetischen Streuflüsse zwischen benachbarten Magnetfluss-Leitstücken.

Die Permanentmagnet-Elemente können auch eine Gestalt aufweisen, die im Wesentlichen mit der Gestalt der Magnetfluss-Leitstücke übereinstimmt; sie können also rechteckig, trapez- oder dreieck-, bzw. rautenförmig, oder dergl. sein.

Erfindungsgemäß können bei der Startermaschine die Permanentmagnet-Elemente in der dem Luftspalt zugewandten Mantelfläche eine Dimensionierung haben, die im Wesentlichen mit der Fläche der Magnetfluss-Leitstücke übereinstimmt.

Die Spulenanordnung kann entweder mit Strom einer einzigen Phase betrieben werden oder als Mehrphasenanordnung (vorzugsweise mehr als zwei) ausgestaltet sein. Im letzteren Fall kann sie mehrere koaxial nebeneinander angeordnete Wicklungen aufweisen, die dazu eingerichtet sind, phasenversetzt zu einander betrieben zu werden.

Dabei kann zwischen zwei nebeneinander angeordneten Wicklungen jeweils ein Magnetfluss-Leitsteg von einem der Magnetfluss-Leitstücke zu dem die beiden Schenkel verbindenden Mittelabschnitt des Magnetfluss-Joches angeordnet sein, wobei der Leitsteg in seinen Abmessungen und seiner Materialwahl (Eisenpulver, Eisenblech, massives eisenhaltiges Metall) so gestaltetet ist, dass er den aus einem Phasenunterschied zwischen den durch die beiden an ihnen angrenzenden Wicklungen fließenden Strömen resultierenden Magnetfluss leiten kann ohne in die magnetische Sättigung zu gelangen.

Zwischen benachbarten Magnetfluss-Leitstücken können magnetisch im Wesentlichen unwirksame Verbinder angeordnet sein, welche die relative Position der Magnetfluss-Leitstücke an der Mantelfläche der Spulenanordnung zueinander festlegen.

In einer bevorzugten Ausführungsform der Erfindung ist bei der Startermaschine der Läufer als hohlzylindrisches Tragrohr ausgestaltet, das an seiner Innenwand die die Permanentmagnet-Elemente trägt, und das über eine radial orientierte Stegwand mit der Abtriebswelle drehfest verbunden ist.

Erfindungsgemäß können die Startermaschine und der Linearmotor durch eine - vorzugsweise im Innern des Gehäuses der erfindungsgemäßen Startervorrichtung angeordnete - elektronische Steuereinheit angesteuert werden, die dazu eingerichtet ist, während einer Ansteuerung des Linearmotors im Sinne eines Ein- oder Ausspurens des Starterritzels in den/aus dem Zahnkranz der Brennkraftmaschine die Startermaschine mit geringer Drehzahl und/oder Drehmoment anzusteuern.

Weiterhin kann die elektronische Steuereinheit dazu eingerichtet sein, die Startermaschine als Ersatz einer Lichtmaschine generatorisch zu betreiben und/oder die Startermaschine als Nebenantrieb zu dem Verbrennungsmotor zu betreiben.

Weitere Merkmale, Eigenschaften, Vorteile und mögliche Abwandlungen werden für einen Fachmann anhand der nachstehenden Beschreibung deutlich, in der auf die beigefügte Zeichnung Bezug genommen ist.

### Kurzbeschreibung der Figuren

Fig. 1 zeigt eine schematische teilweise Längsschnittdarstellung einer erfindungsgemäßen Startervorrichtung.

Fig. 2 zeigt eine schematische, vergrößerte Teilansicht im Längsschnitt eines Ständers der Startermaschine der erfindungsgemäßen Startervorrichtung.

Fig. 3 zeigt eine Abwicklung einer schematischen Draufsicht auf eine weitere Ausführungsform eines Ständers der Startermaschine der erfindungsgemäßen Startervorrichtung aus Fig. 1 mit gegenüber Fig. 1 veränderten Magnetfluss-Leitstücken.

### Detaillierte Beschreibung derzeit bevorzugter Ausführungsbeispiele

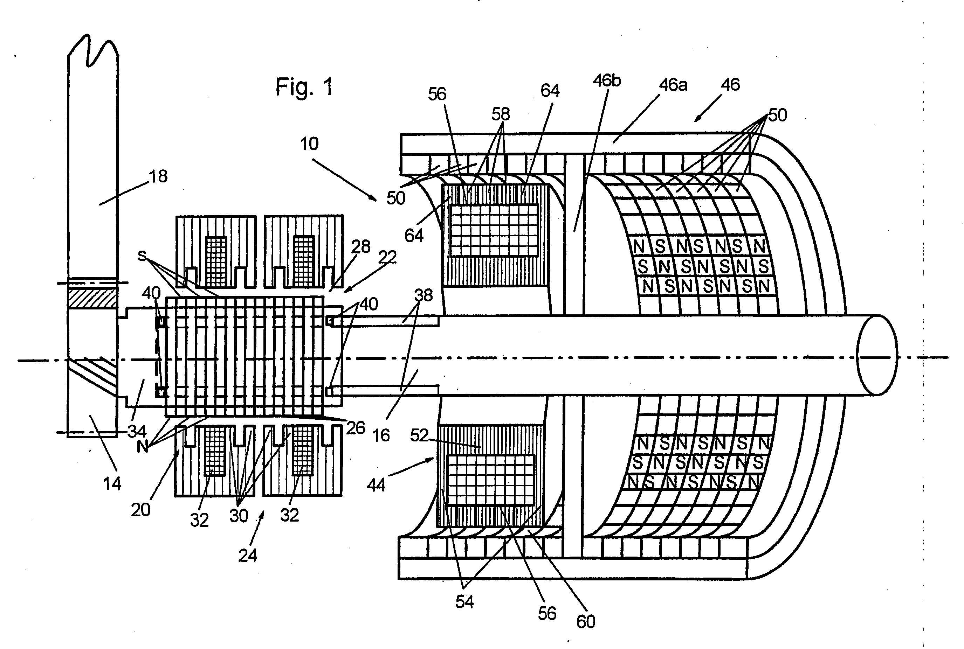

In Fig. 1 ist eine erfindungsgemäße Startervorrichtung der Brennkraftmaschine mit ihren wesentlichen Komponenten im Querschnitt dargestellt. Sie hat eine Startermaschine 10, deren detaillierter Aufbau weiter unten beschrieben ist. Die Startermaschine 10 dreht eine mit einem axial verschiebbar gelagerten Starterritzel 14 zusammenwirkende Abtriebswelle 16. Das Starterritzel 14 wird bei einem Startvorgang der nicht weiter veranschaulichten Brennkraftmaschine zum Einspuren in einen Zahnkranz 18 der Brennkraftmaschine längs seiner Drehachse durch einen koaxial zur Abtriebswelle 16 angeordneten Linearmotor 20 verschoben. Dabei ist der Linearmotor 20 als Innenläufermotor ausgestaltet.

Der Linearmotor 20 hat einen mit dem Starterritzel 14 starr verbundenen hohlzylindrischen Läufer 22 und einen diesen in radialer Richtung vollständig und in axialer Richtung teilweise umgebenden Ständer 24. Der Läufer 22 weist eine Reihe konzentrische, dauermagnetische kreisrunder Ringe 26 auf mit, im Wesentlichen rechteckigem Querschnitt, und auch im Übrigen im Wesentlichen übereinstimmenden Abmessungen, wobei jeweils benachbarte dauermagnetische Ringe 26 radial gerichtete, abwechselnde Magnetorientierungen N, S aufweisen. Damit sind die dauermagnetischen Ringe 26 ein hohlzylindrischer Magnetringstapel, der eine wesentliche Komponente des Läufers darstellt.

Der Ständer 24 ist als weichmagnetischer Formkörper aus gepresstem und gesintertem Metallpulver aufgebaut. Der Ständer 24 umgibt den Läufer 22 unter Bildung eines Luftspaltes 28 konzentrisch und hat mehrere, dem Läufer 22 zugewandte Zähne 30. Jeder der Zähne 30 hat einen im Wesentlichen rechteckigen Querschnitt und umgibt den Läufer 22 in Umfangsrichtung vollständig.

Weiterhin hat jeder der Zähne 30 in der Bewegungsrichtung des Läufers 22 - also längs der Ein-/Ausrückbewegung des Starterritzels 14 - eine Abmessung, die im wesentlichen gleich der Abmessung eines dauermagnetischen Rings 26 in der Bewegungsrichtung des Läufers 22 ist, so dass in einer vorbestimmten Stellung des Läufers 22 jeder Zahn 30 des Ständers 24 mit einem dauermagnetischen Ring 26 fluchtet.

Koaxial zu den Zähnen 30 des Ständers 24 sind jeweils ringzylindrische Ständerspulen 32 angeordnet, die bei entsprechender Bestromung eine Bewegung des Läufers 22 bewirken.

Auf der Abtriebswelle 16 der Startermaschine 10 ist eine hohlzylindrische Mitnehmerhülse 34 im Gleitsitz axial verschiebbar gelagert. Am von der Startermaschine 10 abliegenden Endbereich der Mitnehmerhülse 34 ist das Starterritzel 14 drehfest angeordnet. An der äußeren Mantelfläche der Mitnehmerhülse 34 ist der aus den Ringen 26 gebildete Magnetringstapel in Längsrichtung unverrückbar befestigt. Die Abtriebswelle 16 hat an ihrer Außenfläche zwei (oder mehr) Längsnuten 38, in die an der inneren Mantelfläche der Mitnehmerhülse 34 korrespondierend angeordnete Nasen 40 reichen. Damit ist die Mitnehmerhülse 34 mit der Abtriebswelle 16 derart gekoppelt, dass durch den Linearmotor 20 das auf der Mitnehmerhülse 34 befestigte

Starterritzel 14 im Sinne eines Ein- oder Ausspurens des Starterritzels 14 in den/aus dem Zahnkranz 18 der Brennkraftmaschine zu verschieben ist. Unabhängig von der axialen Position der Mitnehmerhülse 34 bzw. des Starterritzels 14 entlang der Abtriebswelle 16 kann durch die Längsnuten/Nasen-Anordnung 38, 40 die Startermaschine 10 das auf der Mitnehmerhülse 34 befestigte Starterritzel 14 in Rotation versetzen (oder in einem generatorischen Betriebsmodus von der Brennkraftmaschine über den Zahnkranz 18 in Rotation versetzt werden). Ein Rotieren der Abtriebswelle 16 der Startermaschine 10 ist dabel ohne Einfluss auf die Funktion des Linearmotors 20. Mit anderen Worten ist der Linearmotor 20 in der Lage, unabhängig von dem Betrieb der Startermaschine 10 das auf der Mitnehmerhülse 34 befestigte Starterritzel 14 translatorisch zu bewegen.

Das Starterritzel 14 und der Zahnkranz 18 der Brennkraftmaschine sind schrägverzahnt um einen möglichst geräuscharmen Ein- und Ausspurvorgang zu erreichen.

Die Startermaschine 10 ist eine Außenläufermaschine, die einen Ständer 44 und einen Läufer 46 hat. Dabei hat der Ständer 44 eine kreisringzylindrische Spulenanordnung 48 und der Läufer 46 ist mit Permanentmagnet-Elementen 50 versehen ist. Die Spulenanordnung 48 ist von einem Magnetfluss-Joch 52 eingefasst, das an jedem Ende einen Schenkel 54 aufweist, der jeweils eine Stirnfläche der Spulenanordnung 48 teilweise umgreift. An der Mantelfläche 56 der Spulenanordnung 48 sind eine Vielzahl Magnetfluss-Leitstücke 58 koaxial zur Mittellängsachse der Spulenanordnung 48 in mehreren Reihen angeordnet. Die Magnetfluss-Leitstücke 58 begrenzen zusammen mit den Permanentmagnet-Elementen 50 einen kreiszylindrischen Luftspalt 60. Die Permanentmagnet-Elemente 50 haben eine zu dem Luftspalt 60 hin jeweils abwechselnde magnetische Orientierung N, S, so dass sich eine schachbrettartige Anordnung von N-, und S-Magneten zu dem Luftspalt hin ergibt. Außerdem sind die Permanentmagnet-Elemente 50 bzw. die Magnetfluss-Leitstücke 58 so dimensioniert, dass in bestimmten Positionen des Läufers 46 relativ zum Ständer 44 der Startermaschine 10 die Permanentmagnet-Elemente 50 mit einigen der Magnetfluss-Leitstücke 58 zumindest teilweise fluchtend ausgerichtet sind.

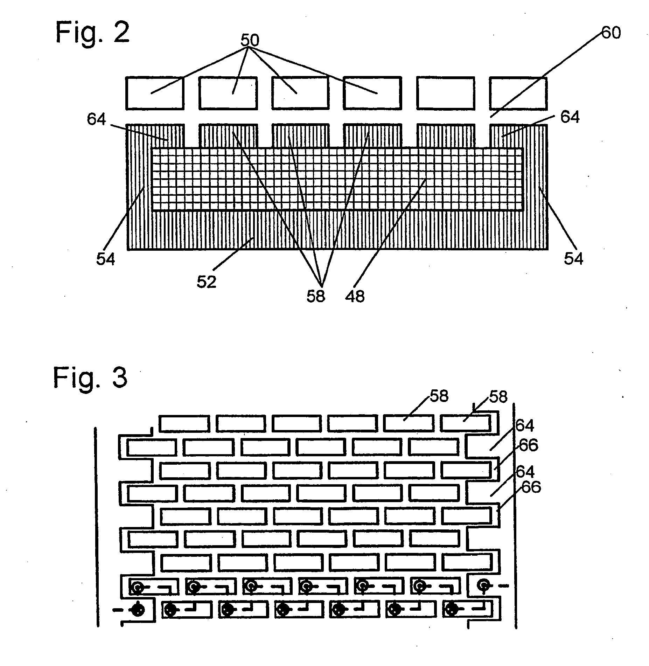

Die Schenkel 54 des Magnetfluss-Joches 52 reichen an beiden Enden von den jeweiligen Stirnflächen der Spulenanordnung 48 her mit einem Endabschnitt 64 auf die Mantelfläche 56 der Spulenanordnung 48, an der die Magnetfluss-Leitstücke 58 angeordnet sind (siehe auch Fig. 2).

Fig. 3 zeigt eine Abwicklung einer schematischen Draufsicht auf eine weitere Ausführungsform eines Ständers der Startermaschine der erfindungsgemäßen Startervorrichtung aus Fig. 1. Hier ist auch zu erkennen, dass die beiden Endabschnitte 64 mit Ausnehmungen 66 versehen sind, in die an sie angrenzende Magnetfluss-Leitstücke 58 ragen. Der Magnetfluss kommt von einer, zum Beispiel der in Fig. 3 rechten Seite des Magnetfluss-Joches 52 durch einen Vorsprung 64 radial nach aussen - über den Luftspalt - in ein damit fluchtendes (in Fig. 2 nicht gezeigtes) erstes Permanentmagnet-Element 50 in einer ersten Reihe. Von dem ersten Permanent-magnet-Element 50 geht der Magnetfluss tangential in ein in der benachbarten Reihe liegendes (in Fig. 2 nicht gezeigtes) Permanentmagnet-Element 50. Von dem Permanentmagnet-Element 50 geht der Magnetfluss - über den Luftspalt - in ein damit fluchtendes Magnetfluss-Leitstück 58 und fließt darin axial weiter. Anschließend geht der Magnetfluss aus diesem Magnetfluss-Leitstück 58 - über den Luftspalt - radial in ein nächstes, in der selben axialen Reihe liegendes zweites Permanentmagnet-Element 50. Von dort geht der Magnetfluss radial - über den Luftspalt - in ein damit fluchtendes Magnetfluss-Leitstück 58 und fließt darin axial weiter. Diesen Weg nimmt der Magnetfluss so lange weiter, bis er zu dem gegenüberliegenden Schenkel des Magnetfluss-Joches gelangt.

Mit anderen Worten fließt der Magnetfluss abwechselnd durch Magnetfluss-Leitstücke 58 und zu diesen ausgerichtete Permanentmagnet-Elemente 50. Dabei wechselt der Magnetfluss jeweils zwischen einer ersten Reihe der Magnetfluss-Leitstücke 58 bzw. mit diesen fluchtenden Permanentmagnet-Elementen 50 zu einer benachbarten zweiten Reihe und wieder zurück zur ersten Reihe in axialer Richtung fortschreitend hin und her.

Das Magnetfluss-Joch 52 ist aus zu der entsprechenden Gestalt gepressten und gesinterten Eisenpartikeln geformt. In gleicher Weise sind auch die Magnetfluss-Leitstücke 58 hergestellt. Zwischen benachbarten Magnetfluss-Leitstücken 58 sind magnetisch im Wesentlichen unwirksame Verbinder angeordnet, welche die relative Position der Magnetfluss-Leitstücke 58 zueinander festlegen.

Der Läufer 46 der Startermaschine 10 ist als hohlzylindrisches Tragrohr 46a ausgestaltet, das an seiner Innenwand die Permanentmagnet-Elemente 50 trägt. Das Tragrohr 46a ist über eine radial orientierte Stegwand 46b mit der Abtriebswelle 16 drehfest verbunden. Dabei ist die Stegwand 46b etwa symmetrisch in der Mitte der Längserstreckung des Tragrohres 46 angeordnet. Auf beiden Seiten der Stegwand 46b sind Ständer mit der Spulenanordnung 48 angeordnet; der besseren Übersicht wegen ist in Fig. 1 lediglich einer der beiden Ständer bzw. Spulen (in Fig. 1 links) veranschaulicht.

Die Spulenanordnung 48 hat zu beiden Seiten der Stegwand 46b koaxial nebeneinander angeordnete Wicklungen, die dazu eingerichtet sind, phasenversetzt zu einander betrieben zu werden. In dem Phasenversatz der Wicklungen entsprechender Weise sind in diesem Fall auch die Permanentmagnet-Elemente 50 des Läufers entlang des Umfangs zu versetzen.

Es ist selbstverständlich auch möglich, die Spulenanordnung auf einer Seite der Stegwand 46b mit mehreren koaxial nebeneinander angeordneten, phasenversetzt zu einander betriebenen Wicklungen zu versehen. In diesem Fall sind die einzelnen Wicklungen durch Magnetfluß leitendes Eisen voneinander zu trennen und auch die Permanentmagnet-Elemente 50 des Läufers in dem Phasenverstz entsprechender Weise entlang des Umfangs zu versetzen. Gleichermaßen ist es möglich, die Stegwand 46b an einem Ende des Tragrohres 46 vorzusehen.

In den Zeichnungen ist - da für einen Fachmann ohne weiteres nachvollziehbar - nicht veranschaulicht, wie die Abtriebswelle 16 in einem Gehäuse gelagert ist, bzw. wie die Ständer des Linearmotors bzw. der Startermaschine 10 in dem Gehäuse aufgenommen sind.

Das Gehäuse der Startervorrichtung nimmt neben den Maschinen auch eine elektronische Steuereinheit auf. Die Startermaschine und der Linearmotor werden durch diese elektronische Steuereinheit derart angesteuert, dass während einer Ansteuerung des Linearmotors im Sinne eines Ein- oder Ausspurens des Starterritzels in den/aus dem Zahnkranz der Brennkraftmaschine die Startermaschine mit geringer Drehzahl und/oder Drehmoment anzusteuern. Diese elektronische Steuereinheit kann die Startermaschine auch als Ersatz einer Lichtmaschine generatorisch betreiben. Gleichermaßen ist sie in der Lage, die Startermaschine als Nebenantrieb zu dem Verbrennungsmotor zu betreiben.

Die vorstehend erläuterten Ausführungsformen erlauben eine maximale Ausnutzung des vorhandenen Raums (sowohl in axialer als auch in radialer Richtung) für die Startervorrichtung bei gleichzeitiger Leistungsoptimierung mit sehr hoher Zuverlässigkeit im Betrieb der Startervorrichtung bei geringen Herstellungskosten.

## Patentansprüche

1. Startervorrichtung für eine zum Start-Stopp-Betrieb eingerichtete Brennkraftmaschine, mit einer Startermaschine (10), die eine mit einem axial verschiebbar gelagerten Starterritzel (14) zusammenwirkende Abtriebswelle (16) dreht, wobei das Starterritzel (14) mit Beginn eines jeden Startvorganges zum Einspuren in einen Zahnkranz (18) der Brennkraftmaschine vorspurt, wobei das Starterritzel (14) durch einen koaxial zur Abtriebswelle (16) angeordneten Linearmotor (20) zu verschieben ist, wobei der Linearmotor (20) als Innenläufermotor ausgestaltet ist, der
- einen mit dem Starterritzel (14) verbundenen hohlzylindrischen Läufer (22) und einen diesen in axialer und/oder radialer Richtung zumindest teilweise umgebenden Ständer (24) aufweist, wobei
- der Läufer (22) konzentrische, dauermagnetische Ringe (26) aufweist,
- der Ständer (24) zumindest teilweise aus einem weichmagnetischen Material aufgebaut ist, den Läufer unter Bildung eines Luftspaltes (28) zumindest abschnittsweise konzentrisch umgibt und zumindest einen dem Läufer (22) zugewandten Zahn (30) aufweist, **dadurch gekennzeichnet, dass**
die Startermaschine (10) eine Außenläufermaschine ist, die einen Ständer (44) und einen Läufer (46) aufweist ist, wobei
- entweder der Ständer (44) eine Spulenanordnung (48) aufweist und der Läufer mit Permanentmagnet-Elementen (50) versehen ist, oder der Läufer eine Spulenanordnung (48) aufweist und der Ständer (44) mit Permanentmagnet-Elementen versehen ist,
- die Spulenanordnung (48) wenigstens eine zylindrische Wicklung aufweist und von einem Magnetfluss-Joch (52) eingefasst ist, das an jedem Ende einen Schenkel (54) aufweist, der jeweils eine Stirnfläche der Spulenanordnung (48) zumindest teilweise umgreift,
- an einer dem Permanentmagnet-Element (50) zugewandten Mantelfläche der Spulenanordnung (48) in mehreren umfangsmässig beabstandeten Reihen jeweils mehrere axial orientierte Magnetfluss-Leitstücke (58) koaxial zur Mittellängsachse der Spulenanordnung (48) angeordnet sind,
- unter Bildung eines Luftspaltes (60) von den Magnetfluss-Leitstücken (58) in mehreren umfangsmässig beabstandeten Reihen jeweils mehrere Permanentmagnet-Elemente (50) angeordnet sind, deren magnetische Orientierung zu dem Luftspalt (60) hin in Drehrichtung jeweils abwechselnd ist, und die in bestimmten Positionen des Läufers (46) relativ zum Ständer (44) mit wenigstens einigen der Magnetfluss-Leitstücke (58) zumindest teilweise fluchtend ausgerichtet sind.

2. Startervorrichtung nach Anspruch 1, **dadurch gekennzeichnet, dass** der dem Läufer (22) zugewandte Zahn (30) den Läufer (22) zumindest teilweise in Umfangsrichtung umgibt.

3. Startervorrichtung nach Anspruch 1 oder 2, **dadurch gekennzeichnet, dass** benachbarte dauermagnetische Ringe (26) des Läufers (22) radial gerichtete, abwechselnde Magnetorientierungen (N, S) aufweisen.

4. Startervorrichtung nach Anspruch 2 oder 3, **dadurch gekennzeichnet, dass** jeweils zwei benachbarte Ringe (26) des Läufers (22) durch magnetisch nicht wirksame Abstandshalter in einem vorbestimmten Abstand zueinander gehalten sind.

5. Startervorrichtung nach einem der Ansprüche 2 bis 4, **dadurch gekennzeichnet, dass** der Zahn (30) eine Abmessung in der Bewegungsrichtung des Läufers (22) hat, die im wesentlichen gleich der Abmessung eines dauermagnetischen Rings (26) in der Bewegungsrichtung des Läufers (22) ist, so dass in einer vorbestimmten Stellung des Läufers (22) der wenigstens eine Zahn (30) des Ständers (24) mit einem dauermagnetischen Ring (26) fluchtet.

6. Startervorrichtung nach einem der Ansprüche 2 bis 5, **dadurch gekennzeichnet, dass** der Bereich der Ständerspule (28) in Bewegungsrichtung des Läufers (22, größer ist als der Abstand zwischen zwei benachbart angeordneten Zähnen (30) des Ständers (24).

7. Startervorrichtung nach einem der Ansprüche 2 bis 5, **dadurch gekennzeichnet, dass** der Ständer (24) ein weichmagnetischer Formkörper, aus gepresstem und/oder gesintertem Metallpulver ist.

8. Startervorrichtung nach einem der Ansprüche 1 bis 7, **dadurch gekennzeichnet, dass** auf der Abtriebswelle (16) eine Mitnehmerhülse (34) axial verschiebbar gelagert ist, an deren von der Startermaschine (10) abliegenden Endbereich das Starterritzel (14) drehfest angeordnet ist, wobei die Abtriebswelle (16) mit der Mitnehmerhülse (34) so gekoppelt ist, dass die Mitnehmerhülse durch den Linearmotor (20) im Sinne eins Ein- oder Ausspurens des Starterritzels (14) in den/aus dem Zahnkranz (18) der Brennkraftmaschine zu verschieben ist.

9. Startervorrichtung nach einem der Ansprüche 1 bis 8, **dadurch gekennzeichnet, dass** das Starterritzel (14) und der Zahnkranz (18) der Brennkraftmaschine schrägverzahnt sind.

10. Startervorrichtung nach Anspruch 1, **dadurch gekennzeichnet, dass** die Spulenanordnung der Startermaschine (10) wenigstens eine kreisringzylindrische Wicklung (48) aufweist und das Magnetfluss-Joch (52) radial innerhalb der Spulenanordnung (48) angeordnet ist.

11. Startervorrichtung nach einem der Ansprüche 1 bis 10, **dadurch gekennzeichnet, dass** bei der Startermaschine (10) Schenkel (62) des Magnetfluss-Joches (52) von den jeweiligen Stirnflächen der Spulenanordnung (48) her mit einem Endabschnitt (64) auf diejenige Mantelfläche der Spulenanordnung (48) reichen, an der die Magnetfluss-Leitstücke (58) angeordnet sind.

12. Startervorrichtung nach Anspruch 11, **dadurch gekennzeichnet, dass** die beiden Endabschnitte (64) mit Ausnehmungen (66) versehen sind, in die an sie angrenzende Magnetfluss-Leitstücke (58) ragen.

13. Startervorrichtung nach einem der Ansprüche 1 bis 12, **dadurch gekennzeichnet, dass** bei der Startermaschine (10) das Magnetfluss-Joch (52) aus Blechen oder Blechabschnitten aufgebaut ist, oder aus zu der entsprechenden Gestalt gepressten und/oder gesinterten Eisenpartikeln geformt ist.

14. Startervorrichtung nach einem der Ansprüche 1 bis 13, **dadurch gekennzeichnet, dass** bei der Startermaschine (10) das Magnetfluss-Joch (52) in einem die beiden Schenkel (54) verbindenden Mittelabschnitt als gerolltes Blechrohr, und/oder die beiden Schenkel (54) als gestapelte kreisringscheibenförmige radial orientierte Blechstapel, und/oder die beiden Endabschnitte der Schenkel (54) als koaxial zur Mittellängsachse orientierte Blechstapel gestaltet sind.

15. Startervorrichtung nach einem der Ansprüche 1 bis 14, **dadurch gekennzeichnet, dass** bei der Startermaschine (10) die Magnetfluss-Leitstücke (58) aus massivem eisenhaltigem Metall, aus gestapelten Blechen oder aus zu der entsprechenden Gestalt gepressten und/oder gesinterten Eisenpartikeln geformt sind.

16. Startervorrichtung nach einem der Ansprüche 1 bis 15, **dadurch gekennzeichnet, dass** bei der Startermaschine (10) die Magnetfluss-Leitstücke (58) eine im Wesentlichen quaderförmige Gestalt oder eine sich in Richtung zu den Endabschnitten der beiden Schenkel hin in der Breite und/oder der Höhe verjüngende Gestalt haben.

17. Startervorrichtung nach einem der Ansprüche 1 bis 16, **dadurch gekennzeichnet, dass** bei der Startermaschine (10) die Permanentmagnet-Elemente (50) in der dem Luftspalt zugewandten Mantelfläche eine Dimensionierung haben, die im Wesentlichen mit der Fläche der Magnetfluss-Leitstücke (58) übereinstimmt.

18. Startervorrichtung nach einem der Ansprüche 1 bis 17, **dadurch gekennzeichnet, dass** bei der Startermaschine (10) der Läufer (46) als hohlzylindrisches Tragrohr (46a) ausgestaltet ist, das an seiner Innenwand die Permanentmagnet-Elemente (50) trägt, und das über eine radial orientierte Stegwand (46b) mit der Abtriebswelle (16) drehfest verbunden ist.

19. Startervorrichtung nach einem der Ansprüche 1 bis 18, **dadurch gekennzeichnet, dass** bei der Startermaschine (10) die Spulenanordnung (48) mehrere koaxial nebeneinander angeordnete Wicklungen aufweist, die dazu eingerichtet sind, phasenversetzt zu einander betrieben zu werden.

20. Startervorrichtung nach einem der Ansprüche 1 bis 19, **dadurch gekennzeichnet, dass** bei der Startermaschine (10) zwischen benachbarten Magnetfluss-Leitstücken (58) magnetisch im Wesentlichen unwirksame Verbinder (70) angeordnet sind, welche die relative Position der Magnetfluss-Leitstücke (58) zueinander festlegen.

21. Startervorrichtung nach einem der Ansprüche 1 bis 20, **dadurch gekennzeichnet, dass** die Startermaschine (10) und der Linearmotor (20) durch eine elektronische Steuereinheit angesteuert werden, die dazu eingerichtet ist, während einer Ansteuerung des Linearmotors (20) im Sinne eines Ein- oder Ausspurens des Starterritzels (12) in den/aus dem Zahnkranz (18) der Brennkraftmaschine die Startermaschine (10) mit geringer Drehzahl und/oder Drehmoment anzusteuern.

22. Startervorrichtung nach einem der Ansprüche 1 bis 21, **dadurch gekennzeichnet, dass** die Startermaschine (10) und der Linearmotor (20) mit einer elektronischen Steuereinheit verbunden sind, die dazu eingerichtet ist, die Startermaschine (10) als Ersatz einer Lichtmaschine generatorisch zu betreiben.

23. Startervorrichtung nach einem der Ansprüche 1 bis 22, **dadurch gekennzeichnet, dass** die Startermaschine (10) und der Linearmotor (20) mit einer elektronischen Steuereinheit verbunden sind, die dazu eingerichtet ist, die Startermaschine (10) als Nebenantrieb zu dem Verbrennungsmotor zu betreiben.

## Claims

1. A starter device for a combustion engine which is adapted for start-stop operation, with a starter machine (10) which rotates an output shaft (16) which cooperates with an axially displaceably supported starter pinion (14), with the starter pinion (14) premeshing upon the commencement of each starting operation for meshing with a ring gear (18) of the combustion engine, wherein the starter pinion (14) is to be displaced by a linear motor (20) which is arranged coaxially with the output shaft (16), with the linear motor (20) being configured as an internal rotor motor which
- comprises a hollow cylindrical rotor (22) which is connected with the starter pinion (14) and a stator (24) surrounding it at least partially in the axial and/or radial direction, wherein
- the rotor (22) comprises concentric, permanent magnet rings (26),
- the stator (24) is at least partially constructed of a soft magnetic material, surrounds the rotor concentrically under the formation of an air gap (28) at least section-wise, and comprises at least one tooth (30) facing towards the rotor (22), **characterised in that**
the starter machine (10) is an external rotor machine which comprises a stator (44) and a rotor (46), wherein
- either the stator (44) comprises a coil arrangement (48) and the rotor is provided with permanent-magnet elements (50), or the rotor comprises a coil arrangement (48) and the stator (44) is provided with permanent-magnet elements (50),
- the coil arrangement (48) comprises at least one cylindrical winding and is surrounded by a magnetic flux yoke (52) which comprises a leg (54) at each end, which at least partially encompasses a respective end face of the coil arrangement (48),
- several axially oriented magnetic flux conducting pieces (58) are arranged at the shell surface of the coil arrangement (48), which faces the permanent magnet element (50) in several rows which are spaced in the circumferential direction, coaxially with the longitudinal centre axis of the coil arrangement (48),
- several permanent magnet elements (50) are arranged in several rows which are spaced in the circumferential direction by the magnetic flux conducting pieces (58) under the formation of an air gap (60), whose magnetic orientation towards the air gap (60) alternates in the direction of rotation and which in certain positions of the rotor (46) relative to the stator (44) are oriented at least partially aligned with at least some of the magnetic flux conducting pieces (58).

2. The starter device according to Claim 1, **characterised in that** the tooth (30) facing the rotor (22) surrounds the rotor (22) at least partially in the circumferential direction.

3. The starter device according to Claim 1 or 2, **characterised in that** neighbouring permanent magnet rings (26) of the rotor (22) comprise radially directed alternating magnetic orientations (N, S).

4. The starter device according to one Claim 2 or 3, **characterised in that** two neighbouring rings (26) each of the rotor (22) are held at a predetermined distance from each other by magnetically not effective spacers.

5. The starter device according to one of Claims 2 to 4, **characterised in that** the tooth (30) has a dimension in the direction of the movement of the rotor (22), which is essentially the same as the dimension of a permanent magnet ring (26) in the direction of the movement of the rotor (22), so that in a predetermined position of the rotor (22) the at least one tooth (30) of the stator (24) is aligned with a permanent magnet ring (26).

6. The starter device according to one of Claims 2 to 5, **characterised in that** the region of the stator coil (28) in the direction of the movement of the rotor (22) is larger than the distance between two neighbouring teeth (30) of the stator (24).

7. The starter device according to one of Claims 2 to 5, **characterised in that** the stator (24) is a soft magnetic formed body of a pressed and/or sintered metal powder.

8. The starter device according to one of Claims 1 to 7, **characterised in that** a driver sleeve (34) is supported on the output shaft (16) in an axially displaceable manner, at the end area of which remote from the starter machine (10) the starter pinion (14) is arranged locked against rotation, with the output shaft (16) being coupled with the driver sleeve (34) in such a manner that the driver sleeve may be displaced by the linear motor (20) in the sense of engaging or disengaging of the starter pinion (14) with the/from the ring gear (18) of the combustion engine.

9. The starter device according to one of Claims 1 to 8, **characterised in that** the starter pinion (14) and the ring gear (18) of the combustion engine are helical-toothed.

10. The starter device according to Claim 1, **characterised in that** the coil arrangement of the starter machine (10) comprises at least one circular cylindrical winding (48) and the magnetic flux yoke (52) is arranged radially within the coil arrangement (48).

11. The starter device according to one of Claims 1 to 10, **characterised in that** legs (62) of the magnetic flux yoke (52) in the starter machine (10) extend from the respective end faces of the coil arrangement (48) so that they reach the shell surface of the coil arrangement (48) with an end portion (64), where the magnetic flux conducting pieces (58) are arranged.

12. The starter device according to Claim 11, **characterised in that** the two end portions (64) are provided with recesses (66) into which the adjacent magnetic flux conducting pieces (58) protrude.

13. The starter device according to one of Claims 1 to 12, **characterised in that** the magnetic flux yoke (52) in the starter machine (10) is constructed of sheets or sheet portions or formed from iron particles which have been pressed and/or sintered to the appropriate shape.

14. The starter device according to one of Claims 1 to 13, **characterised in that** the magnetic flux yoke (52) in the starter machine (10) is configured as a rolled sheet metal tube in a centre portion, which connects the two legs (54), and /or the two legs (54) are configured as stacked circular disc-shaped radially oriented stack of laminations, and/or the two end portions of the legs (54) are configured as stacks of laminations which are oriented coaxially with the longitudinal centre axis.

15. The starter device according to one of Claims 1 to 14, **characterised in that** the magnetic flux conducting pieces (58) in the starter machine (10) are formed from a solid ferriferous metal, from stacked laminations, or from iron particles which have been pressed and/or sintered to the appropriate shape.

16. The starter device according to one of Claims 1 to 15, **characterised in that** the magnetic flux conducting pieces (58) in the starter machine (10) have an essentially rectangular parallelepiped shape or tapering shape in width and/or height in the direction of the end portions of the two legs.

17. The starter device according to one of Claims 1 to 16, **characterised in that** the permanent magnet elements (50) in the starter machine (10) have a dimension in the shell surface facing the air gap, which essentially corresponds to the area of the magnetic flux conducting pieces (58).

18. The starter device according to one of Claims 1 to 17, **characterised in that** the rotor (46) in the starter machine (10) is configured as a hollow cylindrical carrier tube (46a) which carries the permanent magnet elements (50) on its inner wall and which is connected with the output shaft (16) locked against rotation via a radially oriented web wall (46a).

19. The starter device according to one of Claims 1 to 18, **characterised in that** the coil arrangement (48) in the starter machine (10) comprises several windings which are arranged coaxially and adjacent to one another and adapted to be operated in a phase-shifted mode relative to one another.

20. The starter device according to one of Claims 1 to 19, **characterised in that** essentially magnetically not effective connectors (70) are arranged between neighbouring magnetic flux conduction pieces (58) in the starter machine (10), which establish the relative position of the magnetic flux conduction pieces (58) to one another.

21. The starter device according to one of Claims 1 to 20, **characterised in that** the starter machine (10) and the linear motor (20) are driven by an electronic control unit which is adapted to drive the starter machine (10) with a low speed and/or torque during a driving operation of the linear motor (20) in the sense of an engagement or disengagement of the starter pinion (14) with/from the ring gear (18) of the combustion engine.

22. The starter device according to one of Claims 1 to 21, **characterised in that** the starter machine (10) and the linear motor (20) are connected with an electronic control unit which is adapted to operate the starter machine (10) in generator fashion as a replacement for an electric generator.

23. The starter device according to one of Claims 1 to 22, **characterised in that** the starter machine (10) and the linear motor (20) are connected with an electronic control unit which is adapted to operate the starter machine (10) as an auxiliary drive for the combustion engine.

## Revendications

1. Dispositif de démarreur pour un moteur à combustion interne conçu pour un fonctionnement marche-arrêt, comprenant un moteur de démarreur (10) qui fait tourner un arbre de sortie (16) coopérant avec un pignon de démarreur (14) monté mobile en direction axiale, le pignon de démarreur (14) se déplaçant vers l'avant au début de chaque opération de démarrage pour venir en prise dans une couronne dentée (18) du moteur à combustion interne, le pignon de démarreur (14) étant déplacé par un moteur linéaire (20) monté coaxial à l'arbre de sortie (16) et ledit moteur linéaire (20) étant conçu comme un moteur à rotor interne qui présente
- un rotor (22) cylindrique creux relié au pignon de démarreur (14) et un stator (24) entourant au moins partiellement ledit rotor en direction axiale et/ou radiale,
- le rotor (22) présentant des anneaux à aimants permanents concentriques (26),
- le stator (24), constitué au moins partiellement d'une matière magnétique douce, entourant de manière concentrique, au moins par endroits, le rotor en formant un entrefer (28) et présentant au moins une dent (30) face au rotor (22), **caractérisé en ce que**
le moteur de démarreur (10) est un moteur à rotor externe qui présente un stator (44) et un rotor (46), dans lequel
- soit le stator (44) présente un agencement à bobine (48) et le rotor est muni d'éléments à aimants permanents (50), soit le rotor présente un agencement à bobine (48) et le stator (44) est muni d'éléments à aimants permanents,
- ledit agencement à bobine (48) présente au moins un enroulement cylindrique et est enserré par une culasse à flux magnétique (52), laquelle présente à chaque extrémité un bras (54) qui entoure respectivement au moins partiellement une surface frontale de l'agencement à bobine (48),
- sur une surface enveloppe, tournée vers l'élément à aimants permanents (50), de l'agencement à bobine (48), sont respectivement disposées, coaxialement à l'axe longitudinal médian de l'agencement à bobine (48) et suivant plusieurs rangées écartées sur la périphérie, plusieurs pièces conductrices (58) du flux magnétique orientées axialement,
- plusieurs éléments à aimants permanents (50) sont respectivement disposés suivant plusieurs rangées, écartées sur la périphérie, en formant un entrefer (60) vis-à-vis des pièces conductrices du flux magnétique (58), l'orientation magnétique des éléments à aimants permanents (50) étant respectivement alternée par rapport à l'entrefer (60) dans le sens de rotation et lesdits éléments à aimants permanents (50) étant orientés, dans certaines positions du rotor (46) par rapport au stator (44), en alignement au moins partiel avec au moins quelques-unes des pièces conductrices du flux magnétique (58).

2. Dispositif de démarreur selon la revendication 1, **caractérisé en ce que** la dent (30) face au rotor (22) entoure au moins partiellement le rotor (22) dans la direction circonférentielle.

3. Dispositif de démarreur selon la revendication 1 ou 2, **caractérisé en ce que** des anneaux à aimants permanents (26) adjacents du rotor (22) présentent des orientations magnétiques (N, S) alternées et orientées radialement.

4. Dispositif de démarreur selon la revendication 2 ou 3, **caractérisé en ce que** deux anneaux (26) adjacents du rotor (22) sont respectivement maintenus à une distance prédéterminée l'un par rapport à l'autre au moyen d'écarteurs magnétiquement non actifs.

5. Dispositif de démarreur selon l'une des revendications 2 à 4, **caractérisé en ce que** la dent (30) présente, dans le sens de déplacement du rotor (22), un dimensionnement qui est sensiblement identique à celui d'un anneau (26) à aimants permanents dans le sens de déplacement du rotor (22), si bien que la dent (30) au moins du stator (40) est alignée avec un anneau à aimants permanents (26).

6. Dispositif de démarreur selon l'une des revendications 2 à 5, **caractérisé en ce que** la zone de la bobine de stator (28) est, dans le sens de déplacement du rotor (22), plus importante que l'écart compris entre deux dents (30) voisines du stator (24).

7. Dispositif de démarreur selon l'une des revendications 2 à 5, **caractérisé en ce que** le stator (24) est un corps magnétique doux formé à partir de poudre métallique pressée et/ou frittée.

8. Dispositif de démarreur selon l'une des revendications 1 à 7, **caractérisé en ce que**
une douille d'entraînement (34) est montée mobile sur l'arbre de sortie (16), sur la partie terminale duquel - c.-à-d. sur la partie terminale éloignée du moteur de démarreur (10) - est monté fixe en rotation le pignon de démarreur (14), l'arbre de sortie (16) étant couplé de telle manière à la douille d'entraînement (34) que cette dernière est déplacée par le moteur linéaire (20) pour permettre au pignon de démarreur (14) de venir en prise avec la couronne dentée (18) du moteur à combustion interne et de s'en dégager.

9. Dispositif de démarreur selon l'une des revendications 1 à 8, **caractérisé en ce que**
le pignon de démarreur (14) et la couronne dentée (18) du moteur à combustion interne présentent une denture oblique.

10. Dispositif de démarreur selon la revendication 1, **caractérisé en ce que** l'agencement à bobine du moteur de démarreur (10) présente au moins un enroulement cylindrique circulaire et la culasse à flux magnétique (52) est disposée radialement à l'intérieur de l'agencement à bobine (48).

11. Dispositif de démarreur selon l'une des revendications 1 à 10, **caractérisé en ce que,** sur le moteur de démarreur, les bras (62) de la culasse à flux magnétique (52) s'étendent depuis les surfaces frontales respectives de l'agencement à bobine (48), par un tronçon terminal, jusqu'à la surface enveloppe de l'agencement à bobine (48) sur laquelle sont disposées les pièces conductrices du flux magnétique (58).

12. Dispositif de démarreur selon la revendication 11, **caractérisé en ce que** les deux tronçons terminaux (64) sont dotés d'évidements (66) dans lesquels font saillie des pièces conductrices du flux magnétique (58) contiguës à ces derniers.

13. Dispositif de démarreur selon l'une des revendications 1 à 12, **caractérisé en ce que,** sur le moteur de démarreur (10) la culasse à flux magnétique (52) est réalisée à partir de tôles ou de tronçons de tôle, ou est formée à partir de particules de fer pressées dans une configuration correspondante et/ou frittées.

14. Dispositif de démarreur selon l'une des revendications 1 à 13, **caractérisé en ce que,** sur le moteur de démarreur (10), la culasse à flux magnétique (52) est, dans un tronçon médian reliant les deux bras (54), conçue comme un tube de tôle roulée, et/ou les deux bras sont conçus comme des piles de tôles orientées radialement en forme de disques circulaires empilés, et/ou les deux tronçons terminaux des bras (54) sont conçus comme des piles de tôles orientées coaxialement à l'axe longitudinal médian.

15. Dispositif de démarreur selon l'une des revendications 1 à 14, **caractérisé en ce que,** sur le moteur de démarreur (10), les pièces conductrices du flux magnétique (58) sont formées à partir d'un métal massif contenant du fer, de tôles empilées ou de particules de fer pressées dans une configuration correspondante et/ou frittées.

16. Dispositif de démarreur selon l'une des revendications 1 à 15, **caractérisé en ce que,** sur le moteur de démarreur (10), les pièces conductrices du flux magnétique (58) présentent une configuration sensiblement parallélépipédique ou une configuration allant en se rétrécissant en largeur et/ou en hauteur en direction des tronçons terminaux des deux bras.

17. Dispositif de démarreur selon l'une des revendications 1 à 16, **caractérisé en ce que,** sur le moteur de démarreur (10), les éléments à aimants permanents (50) dans la surface enveloppe tournée vers l'entrefer (60) présentent un dimensionnement qui coïncide sensiblement avec la surface des pièces conductrices du flux magnétique (58).

18. Dispositif de démarreur selon l'une des revendications 1 à 17, **caractérisé en ce que,** sur le moteur de démarreur (10), le rotor (46) est conçu comme un tube porteur (46a) cylindrique creux qui supporte sur sa paroi interne les éléments à aimants permanents (50) et qui est relié fixe en rotation à l'arbre de sortie (16) par l'intermédiaire d'une paroi traversante (46b) orientée radialement.

19. Dispositif de démarreur selon l'une des revendications 1 à 18, **caractérisé en ce que,** sur le moteur de démarreur (10), l'agencement à bobine (48) présente plusieurs enroulements disposés coaxialement les uns à côté des autres, qui sont conçus pour fonctionner en déphasage les uns par rapport aux autres.

20. Dispositif de démarreur selon l'une des revendications 1 à 19, **caractérisé en ce que,** sur le moteur de démarreur (10), des connecteurs (70) sensiblement inactifs magnétiquement sont disposés entre des pièces conductrices du flux magnétique (58), lesquels déterminent la position relative des pièces conductrices du flux magnétique (58) les unes par rapport aux autres.

21. Dispositif de démarreur selon l'une des revendications 1 à 20, **caractérisé en ce que** le moteur de démarreur (10) et le moteur linéaire (20) sont commandés par une unité de commande électronique qui est conçue pour assurer à faible vitesse de rotation et/ou avec un faible couple moteur la commande du moteur de démarreur (10), pendant qu'est actionné le moteur linéaire (20), pour permettre au pignon de démarreur (14) de venir en prise avec la couronne dentée (18) du moteur à combustion interne et de s'en dégager.

22. Dispositif de démarreur selon l'une des revendications 1 à 21, **caractérisé en ce que** le moteur de démarreur (10) et le moteur linéaire (20) sont reliés à une unité de commande électronique qui est conçue pour faire fonctionner le moteur de démarreur (10) comme un générateur en remplacement d'un alternateur.

23. Dispositif de démarreur selon l'une des revendications 1 à 22, **caractérisé en ce que** le moteur de démarreur (10) et le moteur linéaire (20) sont reliés à une unité de commande électronique qui est conçue pour faire fonctionner le moteur de démarreur (10) comme une commande auxiliaire du moteur à combustion interne.
